Europäisches Patentamt

European Patent Office

Office europeen des brevets

(19)

(11) Veröffentlichungsnummer: **0 051 817**
**A1**

(12) # EUROPÄISCHE PATENTANMELDUNG

(21) Anmeldenummer 81109190.9

(22) Anmeldetag 29.10.81

(51) Int. Cl.³: **C 02 F 1/72, C 02 F 1/74**

(30) Priorität: 08.11.80 DE 3042193

(43) Veröffentlichungstag der Anmeldung 19.05.82
**Patentblatt 82/20**

(84) Benannte Vertragsstaaten BE DE FR GB NL

(71) Anmelder: **HOECHST AKTIENGESELLSCHAFT,
Postfach 80 03 20, D-6230 Frankfurt/Main 80 (DE)**

(72) Erfinder: **Bodenbenner, Kurt, Dr.,
Hermann-Kaiser-Strasse 4, D-6200 Wiesbaden (DE)**
Erfinder: **Perkow, Helmut, Dr., Delkenheimer
Strasse 16e, D-6238 Hofheim am Taunus (DE)**
Erfinder: **Vollmüller, Helmut, Altkönigstrasse 2,
D-6233 Kelkheim (Taunus) (DE)**

(54) **Verfahren zur Reinigung von Abwasser.**

(57) Abwasser, das schwer abbaubare organische Verunreinigungen enthält, wird durch Oxidation in waßriger Phase bei Temperaturen von 100 bis 310 °C und unter erhöhtem Druck gereinigt. Hierzu wird zunächst in einer ersten Stufe (8) das Abwasser ohne Zusatz von Katalysatoren mit sauerstoffhaltigen Gasen so lange behandelt, bis der CSB-Wert um 50 bis 98% verringert ist. Anschließend wird das so vorgereinigte Abwasser bei gleicher oder höherer Temperatur in einer zweiten Stufe (10) in flüssiger Phase mit einem stärkeren Oxidationsmittel als Sauerstoff behandelt, bis der CSB-Wert auf nahezu 0 g/l abgesunken ist.

EP 0 051 817 A1

HOECHST AKTIENGESELLSCHAFT    HOE 80/F 258    Dr.SP/ss
0051817

## Verfahren zur Reinigung von Abwasser

Die Erfindung betrifft ein Verfahren zur Reinigung von
Abwasser, das organische Verunreinigungen enthält, durch
eine zweistufige Naßoxidation.

Es ist bekannt, daß organisch-verunreinigtes Wasser durch
Oxidation mit sauerstoffhaltigen Gasen bei Temperaturen
zwischen 235° und 370°C und einem Druck, der ausreicht,
mindestens einen Teil des Wassers in flüssiger Phase zu
halten, gereinigt werden kann. Dieser sogenannte "Zimmermann-Prozeß" wird beispielsweise in der US-PS 2 665 249 und
der US-PS 2 824 058 beschrieben.

Manche Abwässer enthalten organische Verunreinigungen, die
zum vollständigen Abbau durch Naßoxidation mit Luft Temperaturen um oder über 320°C und damit Gesamtdrucke bis zu
250 bar erfordern. Dadurch werden die Apparate groß und
teuer, insbesondere wenn chloridhaltige Abwässer beseitigt
werden sollen, die bei hohen Temperaturen extrem korrosiv
sind und daher teure Werkstoffe wie (R)Hastelloy, Titan
oder Tantal benötigen. Zusätzlich werden mit steigendem
Gesamtdruck die Kosten der Kompression der eingesetzten
Luft immer höher.
Es ist möglich den Stoffübergang des Sauerstoffs in die
wäßrige Phase zu verbessern, z.B. durch Einbau von Rührwerken in jede Stufe eines kaskadierten Reaktors (DE-OS
24 35 391). Die damit erreichte Erhöhung der Reaktionsgeschwindigkeit erlaubt es bei einigen Abwässern die notwendigen Reaktionstemperaturen etwas zu senken. Das Verfahren
ist jedoch technisch aufwendig, da ein teurer, gekammerter
Reaktionsapparat mit mehreren Wellenabdichtungen gegen
hohen Druck erforderlich ist.

Man kann auch durch den Einsatz eines Katalysators die notwendige Temperatur und damit den Druck bei gleichbleibender

- 2 -

0051817

Abbauleistung senken. Auf diese Weise lassen sich die Korrosionsprobleme und damit die Apparatekosten erheblich vermindern (DE-OS 25 34 485). Üblicherweise werden als Katalysatoren Schwermetall-Verbindungen, insbesondere Kupfersalze verwendet. Wegen der fungiziden, algiziden und bakteriziden Wirkung der Kupferionen oder toxischen Wirkung anderer Schwermetall-Ionen ist jedoch eine vollständige Entfernung des Katalysators nach der Oxidation unumgänglich. Heterogene Katalysatoren auf Trägermaterial neigen durch Verschmutzung mit Abwasserinhaltsstoffen zur Inaktivierung oder werden durch Katalysatorgifte unwirksam.

Es ist ferner bekannt, daß die Naßoxidation mit Sauerstoff in vielen Fällen nur zu einem Teilabbau der organischen Verunreinigungen führt (US-PS 3 977 966, Beispiel 1; DE-OS 24 45 391). In diesen Fällen hat man es für ausreichend erachtet das so vorbehandelte Abwasser biologisch aufzuarbeiten und dann dem Vorfluter zuzuführen (vgl. Chem.Ing.Technik $\underline{52}$ (1980) Nr. 8, S. A440). Daran ist jedoch nachteilig, daß manche Verbindungen nur sehr langsam biologisch abgebaut werden, ihre Menge in der biologischen Kläranlage also kaum verringert wird.

Man kann auch zur Oxidation Salpetersäure oder deren Salze einsetzen (DE-OS 22 62 754). Dabei muß aber mindestens die stöchiometrische Menge an $HNO_3$ oder ein erheblicher Überschuß eingesetzt werden, was - insbesondere bei hohen CSB-Werten - das Verfahren unwirtschaftlich macht.

In der DE-OS 27 48 638 ist angegeben, daß bei unter-stöchiometrischem $HNO_3$-Einsatz in der Hauptsache nur jene Anteile an organischen Verbindungen zerstört werden, die biologisch toxisch und schwer abbaubar sind. Damit sollen biologisch schlechtabbaubare Abwässer der Reinigung in einer biologischen Kläranlage zugänglich gemacht werden. Dabei ist nachteilig, daß die biologische Reinigung weitere Kosten verursacht. Ferner wird der CSB-Wert in der Kläranlage aber nur wenig verringert, soweit er auf Verunreinigungen zurückgeht, die biologisch nur langsam abgebaut werden, d.h. durch den $BSB_5$-Wert nicht erfaßt werden.

Es bestand daher die Aufgabe ein Verfahren zu finden, das ohne biologische Kläranlage auskommt, die Wirtschaftlichkeit der Naßoxidation mit Sauerstoff aufweist aber dennoch eine nahezu totale Reinigung des Abwassers ermöglicht. Es wurde nun ein Verfahren zur Reinigung von Abwasser das schwerabbaubare Verunreinigungen enthält, durch Oxidation in wäßriger Phase bei Temperaturen von 100 bis 310°C unter erhöhtem Druck gefunden, wobei man zunächst in einer ersten Stufe das Abwasser ohne Zusatz von Katalysatoren mit sauerstoffhaltigen Gasen so lange behandelt bis der CSB-Wert um 50 bis 98 % verringert ist. Das Verfahren ist dadurch gekennzeichnet, daß das in der ersten Stufe vorgereinigte Abwasser anschließend bei gleicher oder höherer Temperatur in einer zweiten Stufe in flüssiger Phase mit einem stärkeren Oxidationsmittel als Sauerstoff behandelt wird bis der CSB-Wert auf nahe 0 g/l $O_2$ abgesunken ist. Die Bestimmung des CSB-Wertes des Abwassers erfolgt mit Dichromat in Gegenwart von Silbersalzen. Diese Methode ist eingehend in "Deutsche Einheitsverfahren für Wasser-, Abwasser- und Schlammuntersuchung", 3. Aufl., 1971, dargestellt.

Als Oxidationsmittel, die stärker sind als Sauerstoff gelten solche Substanzen, die, in 1-molarer Lösung, bzw. unter einem Druck von 0,98 bar in Wasser mit dem pH-Wert der zu reinigenden Lösung, ein höheres Redoxpotential als $O_2$ aufweisen, wie z.B. Ozon oder Chlorat. Bevorzugte Oxidationsmittel in der zweiten Stufe sind Salpetersäure oder Nitrate. In diesem Fall sind pH-Werte von 1 bis 3 bei der Oxidation bevorzugt; jedoch kann auch bei höheren pH-Werten, wenn auch langsamer, oxidiert werden. Die Menge Salpetersäure, bzw. Nitrat beträgt etwa 0,02 bis 0,05 mol/g CSB, insbesondere 0,025 bis 0,03 mol/g CSB.

Salpetersäure und Nitrate neigen unter den Reaktionsbedingungen kaum zur Bildung von Stickoxiden, sondern werden fast vollständig zu Stickstoff reduziert.

- 4 -

0051817

Da beim erfindungsgemäßen Verfahren ein totaler Abbau der organischen Verunreinigungen in der ersten Stufe nicht angestrebt wird, kann man dort mit Temperaturen arbeiten, die um 10 bis 80$^o$C, vorzugsweise 40 bis 60$^o$C, niedriger liegen als die zu einem vollständigen Abbau notwendigen Temperaturen. Unter der "zum vollständigen Abbbau notwendigen Temperatur" wird dabei die Temperatur verstanden, bei der der CSB-Wert eines Abwassers um 95 bis 100 % verringert wird wenn man in einem gerührten Autoklav, bei einer Verweilzeit von 30 Minuten und einem Überschuß an Sauerstoff von 10 bis 20 % arbeitet. Beim erfindungsgemäßen Verfahren muß das Abwasser weniger hoch erhitzt werden, die Apparate können für niedrigere Drücke ausgelegt werden und der korrosive Angriff, insbesondere durch Chloridionen, die häufig in Abwassern vorkommen, wird verringert.

In der ersten Stufe soll der Gesamtdruck das 1,0- bis 3,5-fache, insbesondere das 1,5- bis 2,5-fache des Wasserdampfpartialdruckes bei der Arbeitstemperatur betragen.

Das Abwasser, das die erste Stufe verläßt, wird ohne Abkühlung der zweiten Stufe zugeführt. Dort kann es, bedingt durch einen neu einsetzenden Abbau der organischen Verbindungen bei Zusatz des Oxydationsmittels, zu einer Temperaturerhöhung kommen. Im allgemeinen verläuft daher auch die zweite Stufe bei Temperaturen von 100 bis 310$^o$C. Bevorzugt sind in beiden Stufen Temperaturen von 200 bis 300$^o$C. Bei niedrigeren Temperaturen kann insbesondere gearbeitet werden bei hohem Gehalt an sehr leicht oxidierbaren organischen Stoffen, wie z.B. Formaldehyd. Soweit im Abwasser neben leicht abbaubaren Stoffen auch schwer abbaubare organische Verunreinigungen vorliegen, kann dies in der zweiten Stufe durch Wahl der Temperatur und der Verweilzeit berücksichtigt werden.

Das erfindungsgemäße Verfahren eignet sich besonders für Abwasser mit einem CSB von mindestens 10 g, insbesondere mindestens 20 g CSB/l. Abwässer, die frei sind von Schwermetallionen, sind bevorzugt, da dann nach der Oxidation eine weitere Behandlungsstufe nicht mehr erforderlich ist. Das erfindungsgemäße Verfahren eignet sich zur Reinigung vieler Arten von Abwässer, insbesondere für Abwässer die aus der Produktion von Cellulosefolgeprodukten stammen. Es gelingt dabei in den meisten Fällen das eingesetzte Abwasser soweit zu reinigen, daß der CSB-Wert auf weniger als 2 % des ursprünglichen Wertes abgesunken ist und eine weitere (z.B. biologische) Nachbehandlung überflüssig ist.

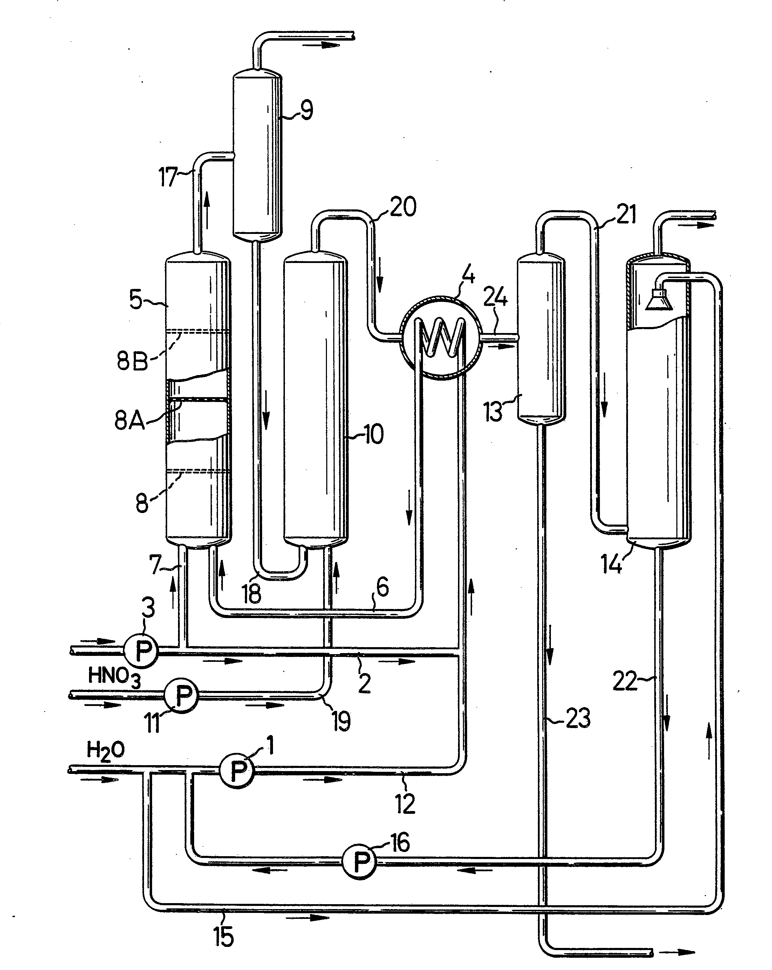

Eine Möglichkeit das erfindungsgemäße Verfahren in technischem Maßstab zu realisieren wird an Hand des Fließschemas der Figur erläutert:

Abwasser mit organischen Verunreinigungen wird mit einer Hochdruckpumpe (1) auf den Betriebsdruck des Reaktors 5 komprimiert und über Leitung 12 zusammen mit einem über (2) zugeführten Teilstrom der in Kompressor 3 komprimierten Luft in einem Gegenstrom-Wärmetauscher 4 aufgewärmt. Danach wird das vorgewärmte Abwasser einem mit Siebböden (8, 8A, 8B) kaskadierten Reaktor 5 von unten durch die Zuleitung 6 zugeführt. Gleichzeitig wird in den Reaktor der Rest der durch Pumpe 3 komprimierten Luft durch die Zuleitung 7 eingespeist. Das Reaktionsgemisch wird über die Leitung 17 einem Scheider 9 zugeführt. Dort werden die inerten Bestandteile der Luft und die Reaktionsgase von der Flüssigphase getrennt. Das zum Teil von den organischen Bestandteilen befreite Abwasser wird nun über (18) einem zweiten Reaktor 10 zugeführt. (Im Prinzip könnte Reaktor 5 auch mit Reaktor 10 verbunden sein, z.B. diesem obenaufgesetzt sein. Die in 5 gebildete Gasphase würde dann erst zusammen mit der Gasphase von 10 von der Flüssigphase getrennt werden - nicht gezeichnet).

Im Reaktor 10 wird nun Salpetersäure in einer zu den organischen Restbestandteilen stöchiometrischen Menge (gerechnet als CSB; 40 g CSB entsprechen 1 Mol $HNO_3$) über eine Pumpe 11 und Leitung 19 zugegeben. Abgesehen von einer durch die Oxidation mit Salpetersäure herbeigeführten Temperaturerhöhung wird Reaktor 10 bei der gleichen Tempera-

0051817

tur betrieben wie der Reaktor 5. Der Druck in 10 ist um den am Kopf von 9 abgelassenen Luftteildruck geringer als der Druck in 5.

Reaktor 10 wird vorzugsweise wie Reaktor 5 als mit Siebböden kaskadierte Blasensäule ausgeführt sein. Jedoch ist auch ein anderer Reaktortyp, wie z.B. ein Rührgefäß oder eine geflutete Füllkörperkolonne möglich. Als Konstruktionsmaterialien sind alle bei der Naßoxidation mit Luft üblichen Werkstoffe geeignet; beispielsweise ist für ein chloridhaltiges Abwasser ein mit Palladium legiertes Titan einsetzbar.

Das gereinigte Abwasser wird anschließend zusammen mit den Reaktionsgasen über Leitung 20 einem Wärmetauscher 4 zugeführt und dort im Gegenstrom mit dem frischen Abwasser gekühlt.

Überschüssige Wärme kann in einem Verdampfer (nicht gezeichnet) zur Erzeugung von Dampf genutzt werden. Von 4 gelangt das Gemisch über Leitung 24 in den Scheider 13. Dort werden Reaktionsgase und Abwasser getrennt. Die Reaktionsgase, die beispielsweise beim Anfahren der Apparatur mit $NO_x$ verunreinigt sein können, werden am Kopf von 13 abgezogen und gelangen über 21 in den Wäscher 14. Dort werden sie in einem über 15 zugeführten Teilstrom des frischen Abwassers gereinigt. Der beladene Waschwasserstrom verläßt 14 am Boden und wird über Leitung 22, in die Pumpe 16 eingefügt ist, in das zu reinigende Abwasser zurückgeführt. So wird eine $NO_x$-Emmission sicher vermieden und die Salpetersäure vollständig zur Oxidation ausgenutzt. Am Fuße von 13 wird gereinigtes Abwasser über Leitung 23 entnommen.

Die Erfindung wird durch die folgenden Beispiele näher erläutert.

Beispiel 1:

Das Abwasser aus einer Produktion von Cellulosefolgeprodukten hat einen CSB-Wert von 40 g/l. Bei einer Naßoxidation im Schüttelautoklaven und einer Luftmenge, die 50 % über dem stöchiometrischen Bedarf liegt, braucht man bei einer Verweilzeit von 1 Stunde eine Temperatur von 330°C und 220 bar Druck für 95 %-igen CSB-Abbau.

Bei einer Naßoxidation allein mit Salpetersäure als Oxidationsmittel wird bei 250°C vollständiger CSB-Abbau erreicht. Je m$^3$ Abwasser werden jedoch 90 kg 65 %-ige $HNO_3$ benötigt.

Wenn das gleiche Abwasser dem erfindungsgemäßen Verfahren unterworfen wird, so läßt sich bei 280°C und 110 bar in der ersten Stufe durch Naßluftoxidation zunächst der CSB-Wert um 75 % auf 10 g/l verringern. Zur vollständigen Oxidation in der zweiten Stufe ist lediglich der Zusatz von 22 kg 65 %-iger $HNO_3$ je m$^3$ Abwasser erforderlich. Auch hier beträgt die Verweilzeit in der ersten Stufe eine Stunde.

Beispiel 2:

Ein anderes Abwasser, das ebenfalls aus der Produktion von Cellulosefolgeprodukten stammt (CSB-Wert 25 g/l), ist durch einen Kochsalzgehalt von 8 Gew.-% bei der zum Abbau durch Naßoxidation erforderlichen Temperatur von 310°C (und einem Druck von 170 bar) extrem korrosiv. Bei Anwendung des erfindungsgemäßen 2-stufigen Verfahrens wird durch Naßluftoxidation schon bei 270°C und 93 bar (Verweilzeit 1 Stunde) ein CSB von 5 g/l erreicht (80 % Abbau). Die zweite Stufe benötigt bei ebenfalls 270°C je m$^3$ Abwasser 11 kg 65 %-ige $HNO_3$ als Oxidationsmittel. Durch die Verringerung der Reaktionstemperatur um 40°C wird der korrosive Angriff des Abwassers verringert, so daß die Oxidation ohne Probleme in Titanapparaturen (vorzugsweise mit Palladium legiert) durchgeführt werden kann.

Patentansprüche:

1. Verfahren zur Reinigung von Abwasser, das schwer abbaubare organische Verunreinigungen enthält, durch Oxidation in wässriger Phase bei Temperaturen von 100 bis 310°C und unter erhöhtem Druck, wobei man zunächst in einer ersten Stufe das Abwasser ohne Zusatz von Katalysatoren mit sauerstoffhaltigen Gasen solange behandelt bis der CSB-Wert um 50 bis 98 % verringert ist, dadurch gekennzeichnet, daß das so vorgereinigte Abwasser anschließend bei gleicher oder höherer Temperatur in einer zweiten Stufe in flüssiger Phase mit einem stärkeren Oxidationsmittel als Sauerstoff behandelt wird, bis der CSB-Wert auf nahezu 0 g/l abgesunken ist.

2. Verfahren nach Anspruch 1, dadurch gekennzeichnet, daß als Oxidationsmittel in der zweiten Stufe Salpetersäure oder Nitrate verwendet werden.

3. Verfahren nach Anspruch 2, dadurch gekennzeichnet, daß pro g CSB im Abwasser das die erste Stufe verläßt, in der zweiten Stufe 0,02 bis 0,05 Mol Salpetersäure oder Nitrat zur Oxidation eingesetzt werden.

4. Verfahren nach Anspruch 1, dadurch gekennzeichnet, daß das Abwasser mit den schwerabbaubaren organischen Verunreinigungen aus der Produktion von Cellulosefolgeprodukten stammt.

5. Verfahren nach Anspruch 1, dadurch gekennzeichnet, daß das eingesetzte Abwasser neben den organischen Verunreinigungen noch Chloride enthält.

0051817

## EINSCHLÄGIGE DOKUMENTE

KLASSIFIKATION DER
ANMELDUNG (Int Cl)

| Kategorie | Kennzeichnung des Dokuments mit Angabe, soweit erforderlich, der maßgeblichen Teile | betrifft Anspruch |
|---|---|---|
| D | DE - A - 2 262 754 (STAMICARBON)<br>* Seite 2, Zeile 7 - Seite 5, Zeile 15 *<br>-- | 1,2 |
| D | DE - A1 - 2 748 638 (HOECHST)<br>* Seite 2, Zeilen 1-9; Seite 3, Zeilen 11-26; Seite 4, Zeilen 30-33 *<br>-- | 1,2,4 |
| X | DE - A - 2 220 385 (DU PONT)<br>* Seite 3; Seite 4, Zeilen 30-33; Seite 7, Zeilen 27-33 *<br>-- | 1,2 |
|  | DE - B - 1 061 703 (HOLMES)<br>* Anspruch 1 *<br>-- | 1,2 |
|  | AT - B - 192 383 (STERLING DRUG)<br>* Seite 1, Zeilen 16-22, 51-63; Seite 2, Zeilen 49-62 *<br>---- | 1,4 |

C 02 F 1/72
C 02 F 1/74

RECHERCHIERTE
SACHGEBIETE (Int Cl)

C 02 F

KATEGORIE DER
GENANNTEN DOKUMENTE

X: von besonderer Bedeutung
A: technologischer Hintergrund
O: nichtschriftliche Offenbarung
P: Zwischenliteratur
T: der Erfindung zugrunde
liegende Theorien oder
Grundsätze
E: kollidierende Anmeldung
D: in der Anmeldung angeführtes
Dokument
L: aus andern Gründen
angeführtes Dokument
&: Mitglied der gleichen Patentfamilie, übereinstimmendes
Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 19-01-1982 | WILFLINGER |